# EUROPEAN PATENT APPLICATION

(11) **EP 2 482 171 A1**
(43) Date of publication of application: **01.08.2012**
(21) Application number: 10818822.8
(22) Date of filing: 22.09.2010
(51) Int. Cl.: G06F 3/041, G06F 3/048, H04M 1/00, H04M 1/247

(54) **INPUT RECEIVING DEVICE, INPUT RECEIVING METHOD, RECORDING MEDIUM, AND MOBILE COMMUNICATION TERMINAL**

(30) Priority: 25.09.2009 JP 2009221628
(71) Applicant: NEC Corporation, Tokyo 108-8001 (JP)
(72) Inventor: KURANE Daisuke, Tokyo 108-8001 (JP)
(74) Representative: Reeve, Nicholas Edward
(86) International application number: PCT/JP2010/066446
(87) International publication number: WO 2011/037149

(57) **Abstract**

Disclosed is a mobile phone (50) provided with a display unit (22a) to display an image, and a touch panel (25a) that is arranged with being superposed on the display unit, and touched by a user. The mobile phone (50) is provided with: a display control unit (22) to display an operation area and an incorrect operation area on a display screen of the display unit (22a); a detection unit (25) to detect occurrence of touch on the touch panel (25a) and its touch position on the display screen; an area determination unit (24) to determine whether the detected touch position is within the operation area or within the incorrect operation area; and a processing control unit (21) to, if touches on the incorrect operation area are performed consecutively within a certain period of time, control the display control unit (22) to display the operation area in a different mode from a mode before the consecutive touches.

## Description

### Technical Field

The present invention relates to an input receiving device, input receiving method, recording medium, and mobile communication terminal.

### Background Art

In an input receiving device that receives input operations from a user, a touch panel is widely used. The touch panel is arranged with being superposed on a front surface of a display unit such as a liquid crystal display (LCD), and waits for a contact operation (a touch operation) by a user's finger or a touch pen (such as a stylus) while displaying a target image (for example, a key image) on the display unit. The input receiving device, when an area of the touch panel that corresponds to a key image (a receiving area) is touched, detects the touch to realize a function assigned to the key image (see, for example, Patent Document 1).

Recently, a mobile phone also has used an input receiving device having such a touch panel (see, for example, Patent Document 2).

In such a mobile phone, in addition to improvement of the design, for dealing with diversification, various functions such as image transmission, bar code reader, GPS, application download, and address (address book) registration are realized by sophisticated operability using the touch panel.

Furthermore, a mobile communication terminal described in Patent Document 2 enlarges and displays a character that is inputted frequently on the touch panel, thereby improving the operability of a character selection operation.

### Prior Art Documents

### Patent Literatures

Patent Document 1: Unexamined Japanese Patent Application Kokai Publication No. 2008-65518
Patent Document 1: Unexamined Japanese Patent Application Kokai Publication No. 2007-280153

### Disclosure of Invention

### Problem to be Solved by the Invention

In the above mobile communication terminal, however, since a character is enlarged according to an input frequency, operability has not been improved due to lack of information of the input frequency during an earlier stage after beginning of use. Further, since operability is improved specializing in character input, operability of operation other than character input, including a contact operation to an area on the touch panel corresponding to a key image, is not sufficiently improved. If a user is a child or a senior, the user may consecutively perform incorrect contacts unconsciously; however, no measure has been undertaken to solve such an incorrect operation. Therefore, a new approach is desired that has both higher operability and sufficient functions for users in a wide age range.

The present invention has been made in light of the above problems, and a first objective of the present invention is to provide an input receiving device and an input receiving method that have high operability , and a recording medium that records a program for realizing the input receiving device and input receiving method on a computer.

A second objective of the present invention is to provide a mobile communication terminal that has both high operability and sufficient functions.

### Means to Solve the Problem

In order to achieve the above first objective, an input receiving device according to a first aspect of the present invention comprises: a display to display an image; and a touch panel that is arranged with being superposed on the display, and touched by a user, the input receiving device comprising:
a display controller to display an operation area and an incorrect operation area on a display screen of the display;
a detector to detect occurrence of touch on the touch panel and a touch position thereof on the display screen;
an area determiner to determine whether the detected touch position is within the operation area or within the incorrect operation area; and
a processing controller to, if touches on the incorrect operation area are performed consecutively within a certain period of time, control the display controller to display the operation area in a different mode from a mode before the consecutive touches.

A mobile communication terminal according to a second aspect of the present invention comprises: an input receiver to receive information input; a wireless communicator to transmit and receive radio waves containing predetermined information; and a communication controller to control the wireless communicator on a basis of information inputted to the input receiver thereby to communicate with outside, the mobile communication terminal comprising
the above-described input receiving device as the input receiver.

An input receiving method according to a third aspect of the present invention is performed by an input receiving device comprising: a display to display an image; and a touch panel that is arranged with being superposed on the display, and touched by a user, the input receiving method comprising::
displaying an operation area and an incorrect operation area on a display screen of the display;
detecting occurrence of touch on the touch panel and a touch position thereof on the display screen;
determining whether the detected touch position is within the operation area or within the incorrect operation area;
measuring number of times of touches on the incorrect operation area within a certain period of time;
determining whether or not touches on the incorrect operation area are performed consecutively within a certain period of time on a basis of number of times of touches on the incorrect operation area, and
if touches on the incorrect operation area are performed consecutively within a certain period of time, displaying the operation area in a different mode from a mode before the consecutive touches.

A computer-readable recording medium according to a fourth aspect of the present invention records a program, the program making a computer function as, the computer comprising: a display to display an image; and a touch panel that is arranged with being superposed on the display, and touched by a user:
a display controller to display an operation area and an incorrect operation area on a display screen of the display;
a detector to detect occurrence of touch on the touch panel and a touch position thereof on the display screen;
an area determiner to determine whether the detected touch position is within the operation area or within the incorrect operation area; and
a processing controller to, if the touches on the incorrect operation area are performed consecutively within a certain period of time, display the operation area in a different mode from a mode before the consecutive touches.

### Effect of the Invention

The present invention can provide a mobile communication terminal that has both high operability and sufficient functions.

### Brief Description of Drawings

FIG. 1 is a schematic diagram illustrating an appearance of a typical mobile phone in which an input receiving device according to an embodiment of the present invention is realized;
FIG. 2 is a functional block diagram of the mobile phone;
FIG. 3 is a flow chart for explaining input receiving processing by the input receiving device;
FIG. 4 is a view illustrating one display screen (before key images are enlarged) of the mobile phone;
FIG. 5 is a view illustrating one display screen (after key images are enlarged) of the mobile phone;
FIG. 6 is a view illustrating one display screen (before frame borders of key images are displayed in bold) of the mobile phone;
FIG. 7 is a flow chart for explaining the rest of the input receiving processing by the input receiving device illustrated in FIG. 3;
FIG. 8 is a view illustrating one display screen (after frame borders of key images are displayed in bold) of the mobile phone;
FIG. 9 is a view illustrating one display screen (transmission mail creation screen) of the mobile phone;
FIG. 10 is a view illustrating one display screen (mode selection screen) of the mobile phone;
FIG. 11 is a view illustrating one display screen (after key images are enlarged) of the mobile phone and a state where a vibration unit is vibrating;
FIG. 12 is a view illustrating one display screen (after key images are enlarged) of the mobile phone and a state where an LED is flickering;
FIG. 13 is a view illustrating one display screen (after key images are enlarged) of the mobile phone and a state where a speaker is issuing a voice; and
FIG. 14 is a table illustrating one example of correspondence relationships between a plurality of threshold values and enlargement factors of key images.

### Best Mode for Carrying out the Invention

Embodiments of the present invention will hereinafter be described with reference to the drawings.

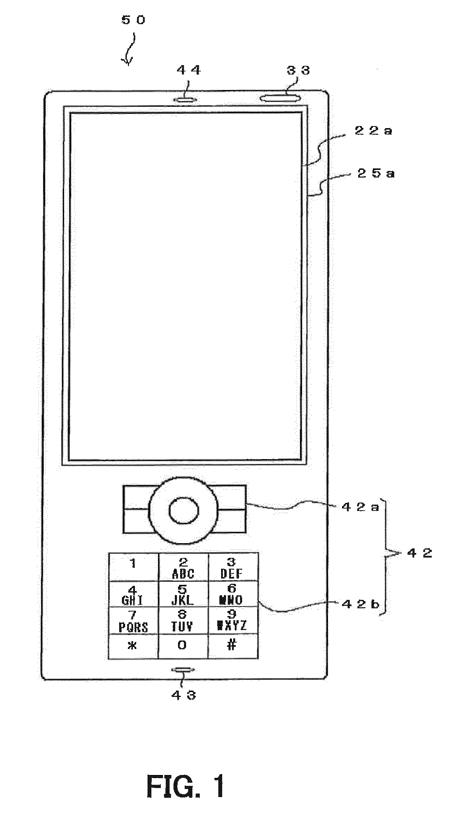

FIG. 1 is a schematic diagram illustrating an appearance of a typical mobile phone (a mobile communication terminal) including an input receiving device according to an embodiment of the present invention. As illustrated, on a surface of this mobile phone 50, disposed are a display unit 22a and a touch panel 25a that is arranged with being superposed on the display unit. On the surface of the mobile phone 50, also disposed are a light emitting diode (LED) 33, operation unit 42, microphone 43, and speaker 44.

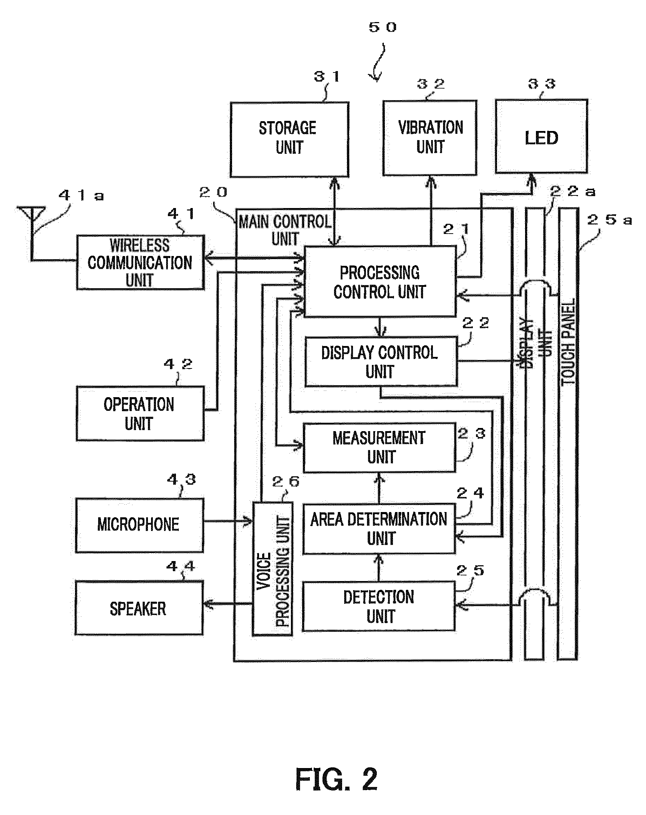

The mobile phone 50 according to the present embodiment performs a verbal communication function, e-mail sending and receiving function, Internet connection function, various application functions such as a TV broadcast receiving and playing function and game applications, and so on, as with an ordinary mobile phone. The mobile phone 50, as illustrated in FIG. 2, includes a main control unit 20, storage unit 31, vibration unit 32, wireless communication unit 41 with an antenna 41 a, and operation unit 42, in addition to the above-described display unit 22a, touch panel 25a, LED 33, microphone 43, and speaker 44.

In the mobile phone 50, the input receiving device is configured to have the display unit 22a, touch panel 25a, main control unit 20, storage unit 31, as well as the vibration unit 32, LED 33 and speaker 44 as an indication unit that will be described later.

Referring to FIGS. 1 and 2, the display unit 22a is configured to have a liquid crystal display device, an organic electroluminescence (EL) display device, or the like, and displays various information such as character information and key images. The touch panel 25a serves as an operation unit, and when an area corresponding a key image or the like displayed in the display unit 22a is touched by a user's finger or a touch pen, detects the touch to realize a function assigned to the area.

The touch panel 25a is a so-called resistive touch panel and has a structure in which two resistance films are laminated with a narrow gap therebetween. In the touch panel 25a, when the panel (resistance films) is pressed down (touch operation) by a finger or the like, the resistance films contact to each other and current flows, whereby voltage is detected. Since a resistance value of the resistance films varies depending on a current-carrying position, an output voltage from the resistance films varies depending on the position. Therefore, the touch panel 25a can output a signal for specifying a position of a touch (a touch position) outward, based on this change of a voltage. The touch panel 25a can be, for example, a capacitance touch panel, instead of the resistive touch panel.

Referring to FIG. 2, the wireless communication unit 41 demodulates radio waves that are received via the antenna 41 a and contain predetermined information such as voice information and e-mails to electrical signals containing the predetermined information and supplies the electrical signals to a processing control unit 21. The wireless communication unit 41 also modulates electrical signals containing predetermined information such as voice information and e-mails supplied from the processing control unit 21 to radio waves including the predetermined information and transmits the radio waves via the antenna 41 a.

As illustrated in FIG. 1, the operation unit 42 is configured to have: a function selection unit 42a that includes a function button to select an e-mail function, communication mode function, menu display function, and so on, a scroll key to move a highlighted portion displayed on the screen, and the like; and a numerical keypad unit 42b to receive character and number inputs. In this way, the operation unit 42 configured to have press buttons and scroll key that receive various inputs on the basis of mechanical structures.

The indication unit is configured to have the vibration unit 32, LED 33, and the speaker 44 described above, as illustrated in FIG. 2. The vibration unit 32 includes a vibration motor, to which a weight is attached so that its gravity center is eccentric to a rotary shaft of the motor. When the motor is turning, vibration occurs due to imbalance of the gravity center. The LED 33 lights up or flickers by inputting a predetermined electrical signal. The speaker 44 generates sound or voice by inputting a predetermined electrical signal.

The main control unit 20 is configured to have a microcomputer including a central processing unit (CPU) and operates by a program stored in the storage unit 31.

The main control unit 20 includes the processing control unit 21 serving as a communication control unit that controls the wireless communication unit 41 on the basis of information inputted to the touch panel 25a or operation unit 42 to communicate with outside. The main control unit 20 includes a display control unit 22 that controls the display unit 22a to display various information such as character information and key image in a predetermined area and also performs processing such as enlarging the key image displayed in the display unit 22a and displaying a frame border encircling the key image in bold. The main control unit 20 further includes a voice processing unit 26 that converts voice information inputted via the microphone 43 into an electrical signal and also generates the inputted electrical signal containing the voice information as voice from the speaker.

The processing control unit 21 controls the wireless communication unit 41 to process e-mails sending to and receiving from a wireless base station, and also controls the wireless communication unit 41 to transmit radio waves containing voice information to a wireless network and to receive radio waves containing voice information from the wireless network.

The processing control unit 21, when the verbal communication function, e-mail sending and receiving function, Internet connection function, or any of various application functions such as a TV broadcast receiving and playing function and game applications is selected via the touch panel 25a, realizes the function. The processing control unit 21 also controls the vibration unit 32 to transmit various electrical signals to the motor, and thereby generates vibration.

The main control unit 20 includes a detection unit 25 to detect a touch position on the basis of an electrical signal outputted from the touch panel 25a and an area determination unit 24 to determine whether or not the detected position is within an area corresponding to a key image displayed in the display unit 22a.

The main control unit 20 includes a measurement unit 23 that, if the detected position is not within an area corresponding to a key image displayed in the display unit 22a, measures (counts) number of times of touches on the area and outputs the measured value (count value) to the processing control unit 21. The measurement unit 23 has a timer built-in, and measuring the number of times of touches on an area corresponding to a key image displayed in the display unit 22a is performed within a time period set by the timer.

The storage unit 31 includes a random access memory (RAM), read only memory (ROM), hard disk device, flash memory, and the like; stores a program for making the main control unit 20 operate and various data to be used for the program; and serves as a work area of the main control unit 20.

The main control unit 20 realizes the above functions of the mobile phone 50 by the program stored in the storage unit 31. That is, the program serves as: the display control unit 22 to cause the display unit 22a to display the display screen (an image displayed in the screen) in such a way that the display screen is divided into a key image (operation area) and an area other than the key image (incorrect operation area); the detection unit 25 to detect occurrence of touch on the touch panel 25a and a touch position thereof; the area determination unit 24 to determine whether the touch position is within an area of the key image or within an area other than the key image; the measurement unit 23 that measures the number of times of touches on the area other than the key image within a certain period of time and, on the basis of the number of times of touches, determines whether or not a plurality of touches on the area other than the key image are performed consecutively within the certain period of time; and the processing control unit 21 that, if the touches on the area other than the key image are consecutively performed, controls the display control unit 22 to display the key image in a different mode from a mode before the consecutive touches.

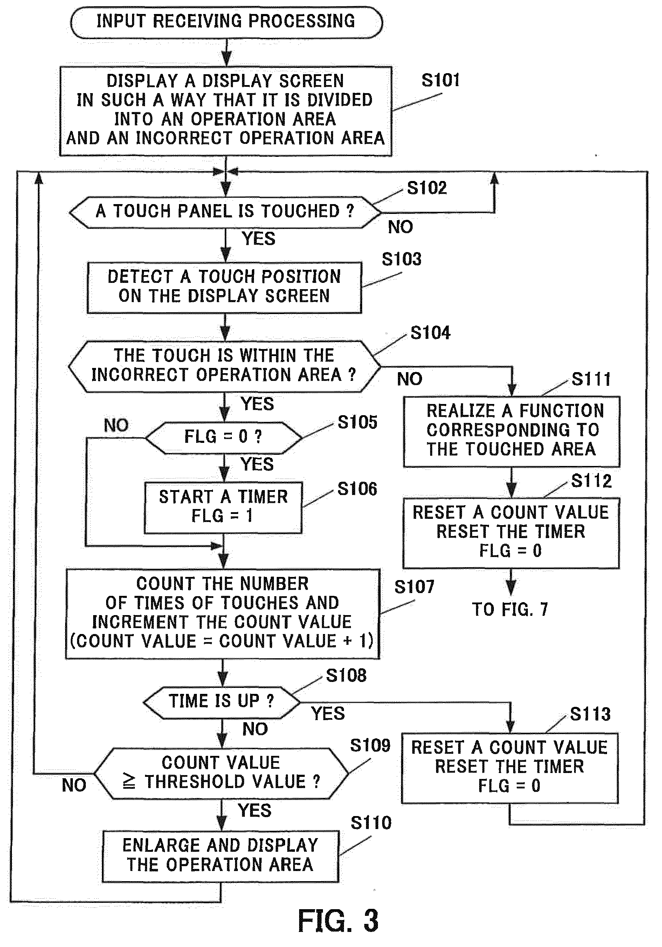

Next, the input receiving processing of the mobile phone 50 according to the present embodiment will be described with reference to flow charts in FIGS. 3 and 7, and FIGS. 4 to 6, 8 and 9.

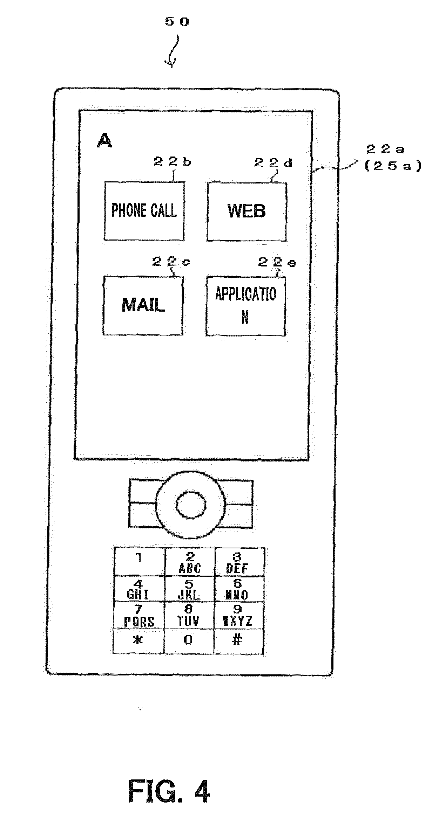

First, when a user turns on the mobile phone 50, the display unit 22a is controlled by the display control unit 22 thereby to display an initial screen illustrated in FIG. 4. In the initial screen, the display unit 22a displays the display screen in such a way that the display screen is divided into an operation area and an incorrect operation area (Step S101). Here, "an operation area" is an area such as an area for a key image where a touch operation by the user is supposed to occur in the display screen, and "an incorrect operation area" is an area such as a background area other than an area for an key image where a touch operation by the user is not supposed to occur in the display screen.

Specifically, as illustrated in FIG. 4, the display unit 22a displays the display screen in such a way that the display screen is divided into the operation area configured to have a phone-call key image 22b, e-mail key image 22c, Internet connection key image 22d, and application key image 22e and the incorrect operation area configured to have a background area A to display a photograph, picture, plain image and so on other than the key images 22b to 22e.

Next, the detection unit 25 detects whether or not the touch panel 25a is touched (Step S102), and if the touch panel 25a is touched (Step S102: Yes), detects a position of the touch (touch position) on the display screen of the display unit 22a (Step S103).

On the other hand, if the touch panel 25a is not touched (Step S102: No), the detection unit 25 continues to detect whether or not the touch panel 25a is touched (Step S102).

When the detection unit 25 detects a touch position on the display screen of the display unit 22a, the area determination unit 24 determines whether or not the touch position is within the incorrect operation area (Step S104).

If it is determined that the background area A in the incorrect operation area is touched (Step S104: Yes), the measurement unit 23 determines whether or not a flag (FLG) is zero (Step S105), and if FLG = 0 (Step S105: Yes), starts the built-in timer to start time measurement and also set FLG = 1 (Step S106). Further, the measurement unit 23 measures (counts) the number of times of touches and increments the count value one by one (Step S107). That is, count value = count value + 1. In an initial state, FLG = 0, timer = 0 [sec], and count value = 0.

On the other hand, if the flag (FLG) is one (Step S105: No), the measurement unit 23 continues the time measurement by the timer and also continues processing of measuring (counting) the number of times of touches on the background area A that is the incorrect operation area and incrementing the count value (Step S107).

Then, the measurement unit 23 determines whether or not the time is up, that is, whether or not the timer goes beyond a period of time (a certain period of time) preset by the timer (Step S108). It the time is not up (Step S108: No), the processing control unit 21 determines whether the count value is greater than or equal to a predetermined threshold value or less than the predetermined threshold vale (Step S109). As for this threshold value, any value can be set by a program. For example, as for two consecutive touches, the threshold value = 2; and as for n (n is a natural number) consecutive touches, the threshold value = n.

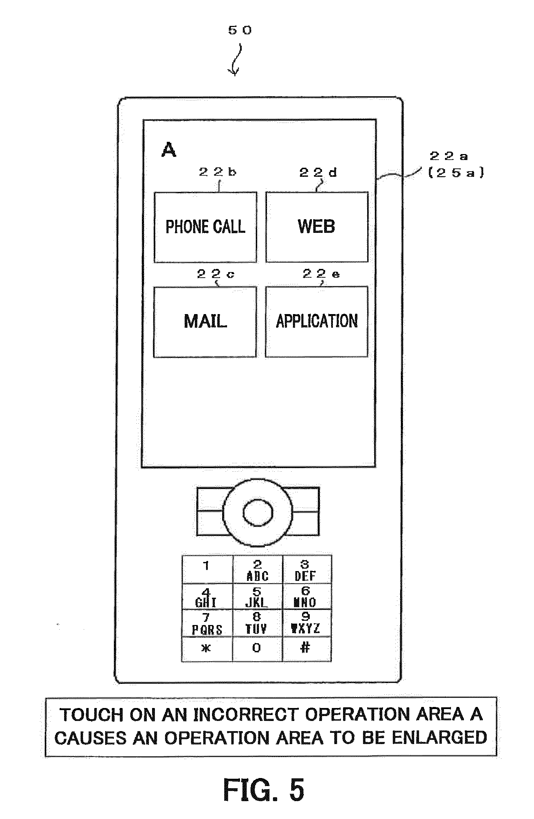

If the count value becomes greater than or equal to the threshold value before the time is up (Step S109: Yes), the display unit 22a is controlled by the display control unit 22 to enlarge and display the operation area, that is, the key images 22b to 22e as illustrated in FIG. 5 (Step S110). Then, the processing returns to Step S102, and the detection unit 25 continues to detect whether or not the touch panel 25a is touched (Step S102).

On the other hand, if the time is up without determining whether the count value is greater than or equal to the predetermined threshold value or less than the predetermined threshold value (Step S108: Yes), the measurement unit 23 resets the count value, timer, and flag (count value = 0, timer = 0 [sec], FLG = 0) (Step S113). Then, without enlarging the key images 22b to 22e by the display unit 22a, processing returns to Step S102, and the detection unit 25 continues to detect whether or not the touch panel 25a is touched (Step S102).

If in Step S104 it is determined that the operation area is touched (Step S104: No), a function corresponding to the touched area is realized (Step S111).

To describe specifically, when any of the key images 22b to 22e set in the operation area is touched, a function assigned to the touched key image is realized. That is, when the user touches the phone-call key image 22b, the display unit 22a displays an address book to realize a telephone call function. When the user touches the e-mail key image 22c, the display unit 22a displays a screen for editing an e-mail to realize an e-mail editing and sending function. When the user touches the Internet connection key image 22d, the display unit 22a displays a screen for connecting the Internet to realize an Internet (web) connection function. When the user touches the application key image 22e, the display unit 22a displays an application menu to realize various application functions such as a TV broadcast receiving and playing function and game applications.

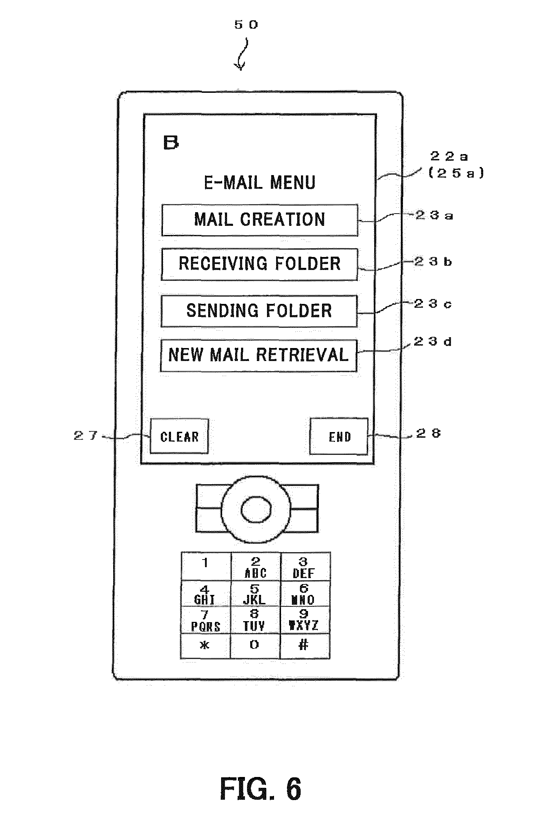

Here, it is assumed that the user touches the e-mail key image 22c. Then, as illustrated in FIG. 6, the display unit 22a displays an e-mail menu screen, which displays a mail creation key image 23a, receiving folder key image 23b, sending folder key image 23c, and new mail retrieval key image 23d that are assigned to a plurality of types of functions related to an e-mail, enabling a required key to be selected. Further, the processing control unit 21 controls the measurement unit 23 to reset the count value, timer, and flag (count value =0, FLG = 0, timer = 0 [sec]) (Step S112).

On this e-mail menu screen, as illustrated in FIG. 6, the display unit 22a further displays a clear key image 27 and an end key image 28. When the user touches the clear key image 27, an image displayed in the display unit 22a in the previous time, in this case, an image illustrated in FIG. 4 or FIG. 5 is displayed. When the user touches the end key image 28, the screen returns to the initial screen illustrated in FIG. 4 and also forcibly quits the realized function.

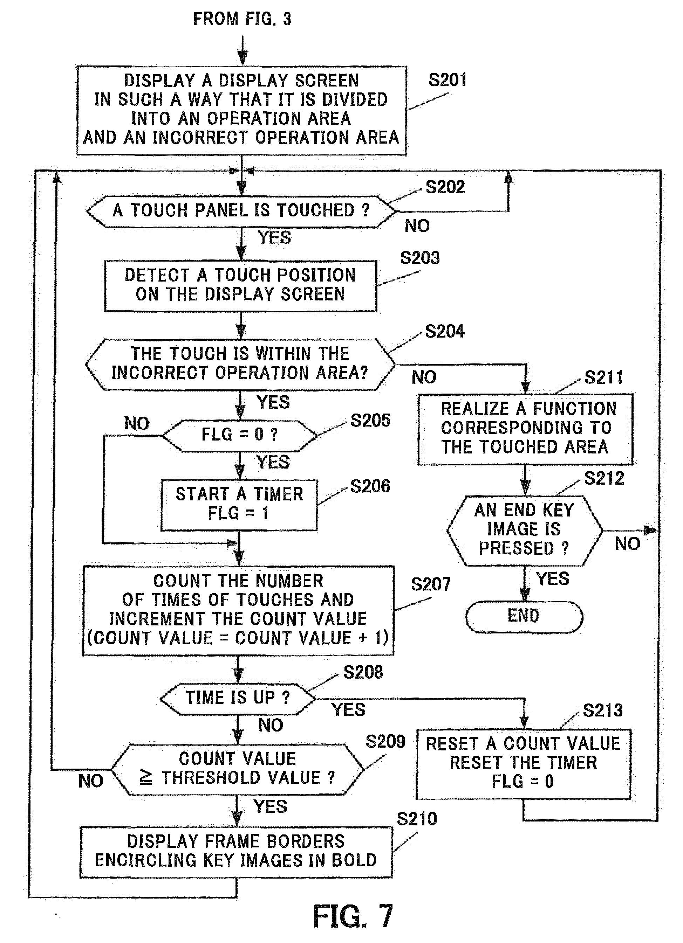

Even in this e-mail menu screen, as illustrated in FIG. 7, the display unit 22a is controlled by the display control unit 22 to display the display screen in such a way that the display screen is divided into the operation area and the incorrect operation area (Step S201).

Specifically, the display unit 22a displays the display screen in such a way that the display screen is divided into the operation area configured to have the mail creation key image 23a, receiving folder key image 23b, sending folder key image 23c, and new mail retrieval key image 23d and the incorrect operation area configured to have an unpatterned, unicolor background area B other than the key images 23a to 23d.

Next, the detection unit 25 detects whether or not the touch panel 25a is touched (Step S202), and if the touch panel 25a is touched (Step S202: Yes), detects a position of the touch on the display screen of the display unit 22a (Step S203).

On the other hand, if the touch panel 25a is not touched (Step S202: No), the detection unit 25 continues to detect whether or not the touch panel 25a is touched (Step S202).

When the detection unit 25 detects the touch position on the display screen of the display unit 22a, the area determination unit 24 determines whether or not the touch position is within the incorrect operation area (Step S204).

If it is determined that the background area B of the incorrect operation area is touched (Step S204: Yes), the measurement unit 23 determines whether or not the flag (FLG) is zero (Step S205), and if FLG = 0 (Step S205: Yes), starts the built-in timer to start time measurement and also sets FLG = 1 (Step S206). Further, the measurement unit 23 measures (counts) the number of times of touches and increments the count value one by one (Step S207). That is, count value = count value + 1.

On the other hand, if the flag (FLG) is one (Step S205: No), the measurement unit 23 continues the time measurement by the timer and also continues processing of measuring (counting) the number of times of touch on the background area B that is the incorrect operation area and incrementing the count value (Step S207).

Then, the measurement unit 23 determines whether or not the time is up, that is, whether or not the timer goes beyond a period of time (a certain period of time) preset by the timer (Step S208). If the time is not up (Step S208: No), the processing control unit 21 determines whether the count value is greater than or equal to a predetermined threshold value or less than the predetermined threshold value (Step S209). As for this threshold value, any value can be set by a program. For example, as for two consecutive touches, the threshold value = 2; and as for n (n is a natural number) consecutive touches, the threshold value = n.

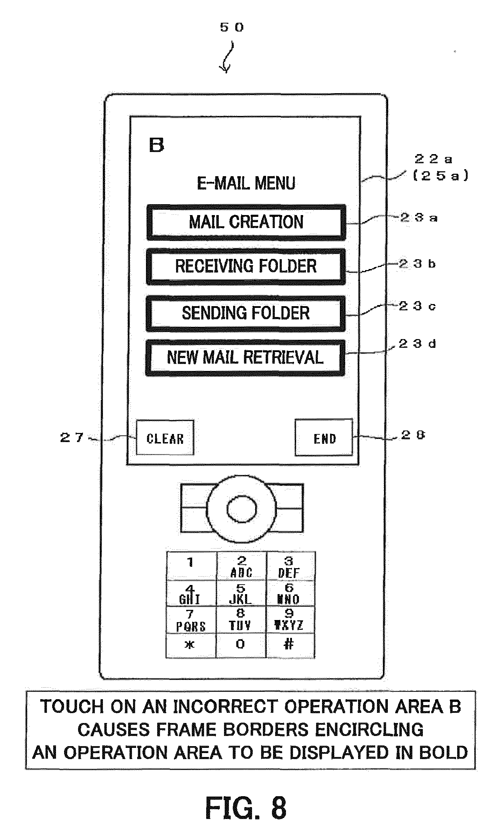

If the count value becomes greater than or equal to the threshold value before the timer is up (Step S209: Yes), the display unit 22a is controlled by the display control unit 22 to display the operation area, that is, the frame borders encircling the key images 23a to 23d in bold, as illustrated in FIG. 8 (Step S210). Then, the processing returns to Step S202, and the detection unit 25 continues to detect whether or not the touch panel 25a is touched (Step S202).

On the other hand, if the time is up without determining whether the count value is greater than or equal to the predetermined threshold value or less than the predetermined threshold value (Step S208: Yes), the measurement unit 23 resets the count value, timer, and flag (count value = 0, timer = 0 [sec], FLG = 0) (Step S213). Then, without displaying the frame borders encircling the key images 23a to 23d in bold by the display unit 22a, the processing returns to Step S202, and the detection unit 25 continues to detect whether or not the touch panel 25a is touched (Step S202).

If in Step S204 it is determined that the operation area is touched (Step S204: No), a function corresponding to the touched area is realized (Step S211).

To describe specifically, if any of the key images 23a to 23d set in the operation area is touched, a function assigned to the touched key image is realized. That is, when the user touches the mail creation key image 23a, the display unit 22a displays the screen for editing an e-mail to realize the e-mail editing and sending function. When the user touches the receiving folder key image 23b, the display unit 22a displays a list of received e-mails to realize the function for viewing received mails. When the user touches the sending folder key image 23c, the display unit 22a displays a list of sent e-mails to realize the function for viewing sent mails. When the user touches the new mail retrieval key image 23d, the display unit 22a displays the screen for new mail retrieval to realize the function for checking new mails.

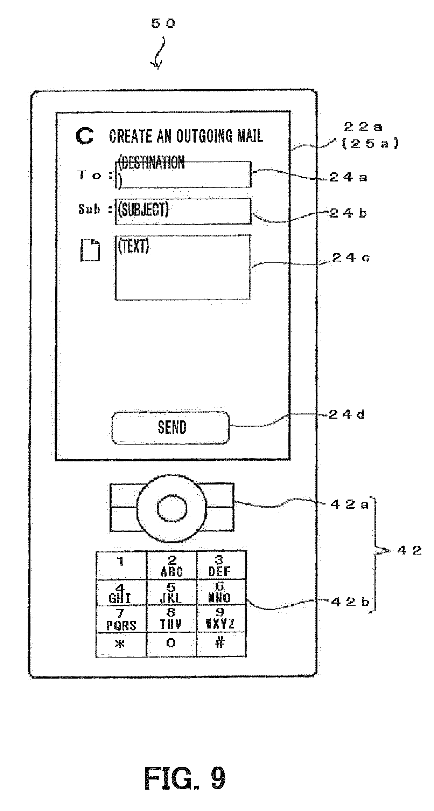

Here, it is assumed that the user touches the mail creation key image 23a. Then, as illustrated in FIG. 9, the display unit 22a displays the screen for creating an outgoing mail and enables an e-mail address, subject, and text of the outgoing mail to be inputted via the operation unit 42.

Even in this screen for creating an outgoing-mail, the display unit 22a is controlled by the display control unit 22 to display the display screen in such a way that the display screen is divided into the operation area and the incorrect operation area and to perform the same processing as the input receiving processing described with reference to FIG. 3 or FIG. 7.

Specifically, a background area C is set to be the incorrect operation area, and a mail sending key image 24d is set to be the operation area. If the background area C that is the incorrect operation area is touched consecutively within a certain period of time, processing of enlarging and displaying the mail sending key image 24d that is the operation area or displaying the frame border encircling the mail sending key image 24d in bold is performed.

In the screen for creating an outgoing mail illustrated in FIG. 9, when the user inputs a mail address, subject, and text, and then correctly touches the mail sending key image 24d displayed on the display screen (Step S212), the e-mail is sent to a wireless base station and the processing here is terminated.

In the mobile phone 50 according to the present embodiment, if there are consecutive touches on an area of the touch panel 25a corresponding to the incorrect operation area displayed in the display unit 22a, that is, consecutive incorrect touches within a certain period of time, the display unit 22a displays the key images 22b to 22e and 23a to 23d (operation area) in a different mode from a mode before the consecutive touches. Specifically, the display unit 22a displays the key images 22b to 22e enlarged, compared with the key images 22 before the consecutive incorrect touches or displays the frame borders encircling the key images 23a to 23d in bold. This enables the user to physically and clearly recognize whether touch on the touch panel 25a is correct or incorrect even if the user has a low cognitive ability and a low operation ability such as a child, thereby leading the user to correctly touch the touch panel 25a. Even in the case where the mobile phone 50 realizes a wide variety of functions, both of high operability and sufficient functions can be obtained.

In the present embodiment, if incorrect touches are performed consecutively within a certain period of time, a key image (operation area) is displayed in a different mode from a mode before the consecutive incorrect touches. Specifically, performed is the processing of enlarging the key images 22b to 22e or displaying the frame borders encircling the key images 23a to 23d in bold displayed on the display unit 22a. However, the present invention is not limited to this embodiment, but may be adapted such that, as for characters displayed within a key image, their font, character style (color, bold, fine, italic), character size, character type (for example, *Hiragana*) may be displayed in a different mode from a mode before the consecutive touches. The key images 22b to 22e may be changed in display color, displayed brighter, flickered, changed in shape (for example, circle, oval, triangle, star), rotated, vibrated, or moved in position.

In the present embodiment, on the condition that it is determined that an area of the touch panel 25a corresponding to the incorrect operation area displayed in the display unit 22a is touched consecutively the number of times corresponding to one predetermined threshold value within a certain period of time, the display unit 22a displays the key images 22b to 22e and 23a to 23d in a different mode from a mode before the consecutive touches. However, the present invention is not limited to this embodiment, but may be adapted such that the threshold value is configured to have a plurality of stages of threshold values, and every time the number of times of consecutive incorrect touches within a certain period of time reaches beyond each of the plurality of stages of threshold values, a key image (operation area) is enlarged in a stepwise fashion or a frame border encircling the key image is displayed in bold in a stepwise fashion.

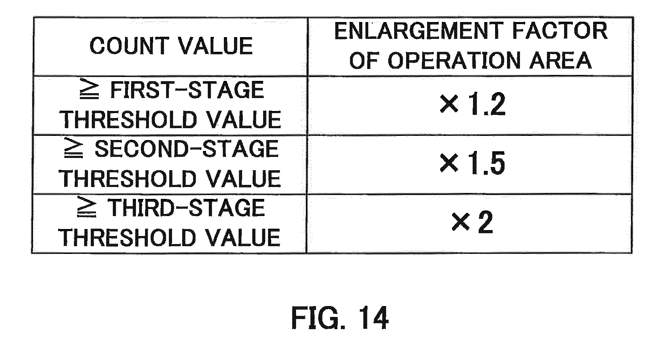

In an example illustrated in FIG. 14, if the number of times of consecutive incorrect touches within a certain period of time reaches beyond a first-stage threshold value, the display unit 22a enlarges a size of a key image (touched area) 1.2 times more than a size before the consecutive incorrect touches within a certain period of time; if it reaches beyond a second-stage threshold value, 1.5 times; and if it reaches beyond a third-stage threshold value, twice. In this way, the threshold value may be configured to have a plurality of stages of threshold values, and every time the number of times of consecutive incorrect touches reaches beyond each of the plurality of stages of threshold values, the display unit 22a may display the key images 22b to 22e and 23a to 23d in a gradually different mode from a mode before the consecutive touches. FIG. 14 is only one example, and stages of threshold values are not limited to three stages and any enlargement factor can be employed.

In the present embodiment, on the condition that it is determined that an area of the touch panel 25a corresponding to the incorrect operation area displayed in the display unit 22a is consecutively touched a plurality of number of times within a certain period of time, the display unit 22a displays the key images 22b to 22e and 23a to 23d in a different mode from a mode before the consecutive touches. However, the present invention is not limited to this embodiment, but may be adapted such that that, on the condition that it is determined that two or more keys are touched by a finger or the like at the same time, the display unit 22a displays the key images 22b to 22e and 23a to 23d in a different mode from a mode before the consecutive touches. It is also possible that, on the condition that it is determined that an area of the touch panel 25a corresponding to the operation area or incorrect operation area remains touched for a certain period of time or more, the display unit 22a displays the key images 22b to 22e and 23a to 23d in a different mode from a mode before the consecutive touches.

In the present embodiment, when the display unit 22a displays the key images 22b to 22e in a different mode from the previous mode, the change from the previous mode to the different mode may be immediate or gradual.

In the present embodiment, the key images 22b to 22e displayed in a different mode from the previous mode can return to the previous mode as time passes. That is, the display unit 22a displays the key images 22b to 22e in a different mode from the previous mode after consecutive incorrect touches within a certain period of time, and after a predetermined threshold period of time passes, the key images 22b to 22e may be displayed in the previous mode; or as time passes, the key images 22b to 22e may be gradually displayed in the previous mode.

In the present embodiment, in the case where there are consecutive incorrect touches within a certain period of time, the display unit 22a displays an key image (operation area) in only a difference mode from a mode before the consecutive touches.

However, the present invention is not limited to this embodiment, but may be adapted such that in the case where incorrect touches are performed consecutively within a certain period of time, the display unit 22a displays a key image (operation area) in a different mode from a mode before the consecutive touches, and in addition to this, the indication unit provides indication by at least one of vibration, light, and voice.

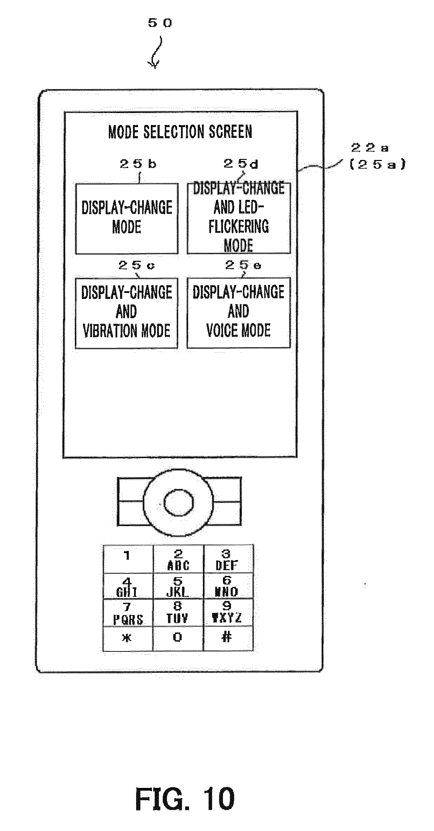

Specifically, first, as illustrated in FIG. 10, when the user turns on the mobile phone 50, the display unit 22a displays a mode selection screen that is an initial screen. This mode selection screen displays four key images, that is, a display-change mode key image 25b, display-change and vibration mode key image 25c, display-change and LED-flickering mode key image 25d, and display-change and voice mode key image 25e.

Then, when the user touches the display-change mode key image 25b, a display-change mode is set to perform processing in which the display unit 22a enlarges and displays the key images 22b to 22e, or displays the frame borders encircling the key images 23a to 23d in bold, as described in the above embodiment.

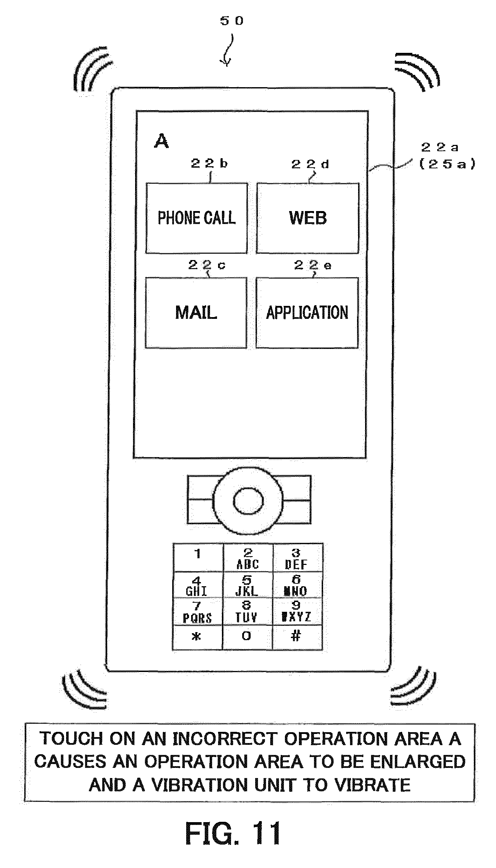

When the user touches the display-change and vibration mode key image 25c, a display-change and voice mode is set. In this display-change and voice mode, as illustrated in FIG. 11, in the case where incorrect touches are performed consecutively within a certain period of time, the vibration unit 32 vibrates in addition to enlarging and displaying the key images 22b to 22e as compared with the key images 22b to 22e before the consecutive touches (or processing of displaying the frame borders encircling the key images 22b to 22e in bold is also possible).

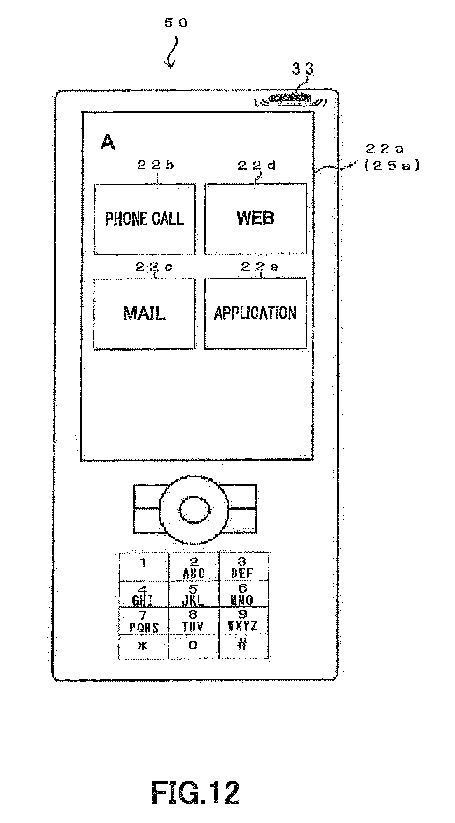

When the user touches the display-change and LED-flickering mode key image 25d, a display-change and LED-flickering mode is set. In this display-change and LED-flickering mode, as illustrated in FIG. 12, in the case where incorrect touches are performed consecutively within a certain period of time, the LED 33 flickers in addition to enlarging and displaying the key images 22b to 22e as compared with the key images 22b to 22e before the consecutive touches (or processing of displaying the frame borders encircling the key images 22b to 22e in bold is also possible).

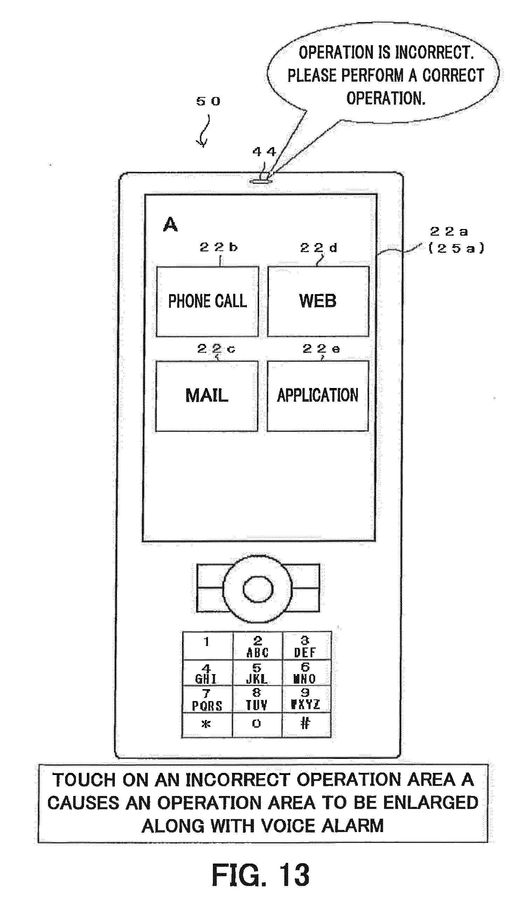

When the user touches the display-change and voice mode key image 25e, a display-change and voice mode is set. In this display-change and voice mode, as illustrated in FIG. 13, in the case where incorrect touches are performed consecutively within a certain period of time, the speaker 44 issues a voice ("Your operation is incorrect. Please perform a correct operation.") in addition to enlarging and displaying the key images 22b to 22e as compared with the key images 22b to 22e before the consecutive touches (or processing of displaying the frame borders encircling the key images 22b to 22e in bold is also possible).

Release of each of the above modes can be performed by touching again any of the key images 25b to 25e touched by the user for setting the corresponding mode. The mobile phone 50 is in an initial state in which any of the above respective modes is not set at the factory shipment. By touching again each of the key images 25b to 25e, the mobile phone 50 returns to the initial state.

Further, more than one of the above vibration, light or voice indication can be simultaneously performed, in addition to displaying the key images 23a to 23d in a different mode from a mode before the consecutive touches. For example, an indication by vibration and light, indication by light and voice, or indication by vibration and voice can be performed.

Further, the threshold value may be configured to have a plurality of stages of threshold values (here, three stages: a first-stage threshold value = 2, second-stage threshold value = 4, and third-stage threshold value = 6), and every time the number of times of consecutive incorrect touches within a certain period of time reaches the first-stage threshold value (= 2), the second-stage threshold value (= 4), and the third-stage threshold value (= 6), a key image (operation area) may be sequentially changed to the mode illustrated in FIG. 11, to the mode illustrated in FIG. 12, and to the mode illustrated in FIG. 13, respectively. Alternatively, every time the number of times of consecutive incorrect touches within a certain period of time reaches the first-stage threshold value (= 2), second-stage threshold value (= 4), or third-stage threshold value (= 6), a degree of vibration, intensity of light, or volume of voice may be increased in a stepwise fashion.

In the present embodiment, with the use of four key images 22b to 22e displayed in the display unit 22a, a mode previously assigned to each of the key images 22b to 22e is selected and set. However, the present invention is not limited to this embodiment, but may be adapted such that a plurality of modes suitable for respective users are previously stored in the storage unit 31 according to a password; and by inputting the password to the operation unit 42, the main control unit 20 automatically selects and sets a suitable mode.

Further, the following configuration can also be employed. That is, a suitable mode according to an attribute of a user such as an adult, child, or senior may be previously stored in the storage unit 31. Then, based on a face image, voice, or the like detected by a camera or microphone disposed in the mobile phone 50, the main control unit 20 automatically determines an attribute of the user, and if the incorrect operation area is consecutively touched within a certain period of time, the main control unit 20 may automatically select and set a mode corresponding to the attribute of the user. For example, if it is determined that the user is a child by face image authentication, characters and sentences within a key image may be displayed with the use of an easy word, character style (bold), character size, and character type ("*hiragana*", "*katakana*" and the like) that are easy to be recognized by a child.

In the present embodiment, the operation unit 42 configured to have the function selection unit 42a and numerical keypad unit 42b is separated from the display unit 22a and touch panel 25a, and is configured to have the mechanical structures such as the press buttons and scroll key. However, the present invention is not limited to this embodiment, but can be adapted such that the display unit 22a displays a function selection key image or numerical keypad, thereby configuring the operation unit 42 in a software fashion.

The present invention is not limited to the mobile phone described in the above embodiment, but can be applied to a mobile communication terminal such as a personal digital assistant (PDA), mobile personal computer (PC), as well as other information processing devices. That is, the above embodiment is only for explaining the present invention, and not for limiting the scope of the present invention. Accordingly, a person skilled in the art can employ embodiments in which each or all of these components is/are substituted by the equivalent(s), and these embodiments are also included in the scope of the present invention.

The present invention is based on Japanese Patent Application Publication No. 2009-221628 filed on September 25, 2009. The whole of the description, claims and drawings of Japanese Patent Application Publication No. 2009-221628 is incorporated herein by reference.

### Descriptiion of Reference Numerals

- 20: Main Control Unit
- 21: Processing Control Unit
- 22: Display Control Unit
- 22a: Display Unit
- 23: Measurement Unit
- 24: Area Determination Unit
- 25: Detection Unit
- 25a: Touch Panel
- 26: Voice Processing Unit
- 31: Storage Unit
- 33: LED
- 41: Wireless Communication Unit
- 41a: Antenna
- 42: Operation Unit
- 42a: Function Selection Unit
- 42b: Numerical Keypad Unit
- 43: Microphone
- 44: Speaker
- 50: Mobile Phone

## Claims

1. An input receiving device comprising: a display to display an image; and a touch panel that is arranged with being superposed on the display, and touched by a user; the input receiving device comprising:
a display controller to display an operation area and an incorrect operation area on a display screen of the display;
a detector to detect occurrence of touch on the touch panel and a touch position thereof on the display screen;
an area determiner to determine whether the detected touch position is within the operation area or within the incorrect operation area; and
a processing controller to, if touches on the incorrect operation area are performed consecutively within a certain period of time, control the display controller to display the operation area in a different mode from a mode before the consecutive touches.

2. The input receiving device according to claim 1, further comprising a counter to measure number of times of touches on the incorrect operation area within a certain period of time,
wherein the processing controller, if the number of times of touches becomes greater than or equal to a predetermined threshold value, controls the display controller to display the operation area in a different mode from a mode displayed when the number of times of touches is less than the threshold value.

3. The input receiving device according to claim 2, wherein the processing controller, if the number of times of touches becomes greater than or equal to the predetermined threshold value, controls the display controller to display the operation area in such a way that the operation area is enlarged and displayed, as compared with the operation area displayed when the number of times of touches is less than the threshold value.

4. The input receiving device according to claim 2, wherein the threshold value is configured to have a plurality of stages of threshold values, and the processing controller controls the display controller to display the operation area in a different mode every time the number of times of touches becomes greater than or equal to the threshold value of each of the stages.

5. The input receiving device according to claim 4, wherein the processing controller controls the display controller to display the operation area in such a way that the operation area is enlarged in a stepwise fashion every time the number of times of touches becomes greater than or equal to the threshold value of each of the stages.

6. A mobile communication terminal comprising: an input receiver to receive information input; a wireless communicator to transmit and receive radio waves containing predetermined information; and a communication controller to control the wireless communicator on a basis of information inputted to the input receiver thereby to communicate with outside, the mobile communication terminal comprising
the input receiving device according to claim 1 as the input receiver.

7. An input receiving method performed by an input receiving device, the input receiving device comprising: a display to display an image; and a touch panel that is arranged with being superposed on the display, and touched by a user, the input receiving method comprising:
displaying an operation area and an incorrect operation area on a display screen of the display;
detecting occurrence of touch on the touch panel and a touch position thereof on the display screen;
determining whether the detected touch position is within the operation area or within the incorrect operation area;
measuring number of times of touches on the incorrect operation area within a certain period of time;
determining whether or not touches on the incorrect operation area are performed consecutively within a certain period of time on a basis of number of times of touches on the incorrect operation area; and
if touches on the incorrect operation area are performed consecutively within a certain period of time, displaying the operation area in a different mode from a mode before the consecutive touches.

8. A computer-readable recording medium that records a program, the program making a computer function as, the computer comprising: a display to display an image; and a touch panel that is arranged with being superposed on the display, and touched by a user:
a display controller to display an operation area and an incorrect operation area on a display screen of the display;
a detector to detect occurrence of touch on the touch panel and a touch position thereof on the display screen;
an area determiner to determine whether the detected touch position is within the operation area or within the incorrect operation area; and
a processing controller to, if the touches on the incorrect operation area are performed consecutively within a certain period of time, display the operation area in a different mode from a mode before the consecutive touches.
